# FASCICULE DE BREVET EUROPEEN

(11) **EP 2 201 066 B1**
(45) Date de publication et mention de la délivrance du brevet: **28.08.2019**
(21) Numéro de dépôt: 08840247.4
(22) Date de dépôt: 17.10.2008
(51) Int. Cl.: C08L 77/00, C08K 7/02

(54) **COMPOSITION POLYAMIDE CHARGEE PAR DES FIBRES**
POLYAMIDZUSAMMENSETZUNG MIT FASERFÜLLSTOFF
POLYAMIDE COMPOSITION FILLED WITH FIBRES

(30) Priorité: 19.10.2007 FR 0707326
(43) Date de publication de la demande: 30.06.2010
(73) Titulaire: Rhodia Opérations, 93306 Aubervilliers (FR)
(72) Inventeur: TROUILLET-FONTI, Lise, F-38200 Villette-de-Vienne (FR); AMICI, Marco, I-06131 Perugia (IT); LAPIERRE, Christophe, F-69330 Jonage (FR); ROBERT, Gilles, 69290 Craponne (FR)
(74) Mandataire: Schuck, Alexander
(86) Numéro de dépôt international: PCT/EP2008/064042
(87) Numéro de publication internationale: WO 2009/050269

(56) Documents cités:
- EP-A1- 1 870 436
- WO-A-97/24388
- WO-A1-00/75232
- WO-A1-2008/107314
- WO-A1-2009/037276
- WO-A2-2008/030600
- JP-A- H06 345 960
- DAVIDSON T ET AL: "Flow response and microstructure of polymers reinforced with discontinuous fibers" MATERIALS RESEARCH SOCIETY SYMPOSIUM PROCEEDINGS, MATERIALS RESEARCH SOCIETY, PITTSBURG, PA, US, vol. 289, 1993, pages 231-235, XP009098499 ISSN: 0272-9172
- BERNASCONI ET AL.: "Effect of fibre orientation on the fatigue behaviour of a short glass fibre reinforced polyamide-6" INTERNATIONAL JOURNAL OF FATIGUE, vol. 29, 2007, pages 199-208, XP002475917
- "ISO 11443 / Plastics -- Determination of the fluidity of plastics using capillary and slit-die rheometers", INTERNATIONAL STANDARD ISO/IEC, XX, XX, vol. ISO 11443, 1 January 2014 (2014-01-01), pages 1-36, XP009181852,
- "Plastics -- Polyamide (PA) moulding and extrusion materials -- Part 2: Preparation of test specimens and determination of properties", ISO 1874-2,, 1 January 2012 (2012-01-01), page 12pp, XP009181851,

## Description

La présente invention concerne une composition polyamide chargée par des fibres présentant de bonnes propriétés mécaniques et rhéologiques. L'invention concerne notamment une composition comprenant au moins un polyamide de haute fluidité en phase fondue et des fibres, notamment des fibres de verre; ainsi qu'un procédé pour la fabrication d'une telle composition.

### ART ANTERIEUR

Parmi les propriétés que l'on cherche souvent à contrôler pour un matériau thermoplastique destiné à être mis en forme par des techniques telles que l'injection, l'injection-gaz, l'extrusion, l'extrusion-soufflage, on cite la rigidité, la résistance aux chocs, la stabilité dimensionnelle, en particulier à température relativement élevée, le faible retrait après mise en forme, l'aptitude à la mise en peinture par différents procédés, l'aspect de surface, la densité. Ces propriétés peuvent être contrôlées, dans certaines limites, par le choix d'un polymère ou par l'adjonction au polymère de composés de différentes natures. Dans ce dernier cas, on parle de compositions polymères. Le choix d'un matériau pour une application donnée est généralement guidé par le niveau de performance exigé vis à vis de certaines propriétés et par son coût. On cherche toujours de nouveaux matériaux susceptibles de répondre à un cahier des charges en terme de performance et/ou de coût. Le polyamide est par exemple un matériau largement utilisé, notamment dans le domaine de l'industrie automobile.

Le polyamide est un polymère qui est résistant chimiquement, qui est stable à des températures élevées et qui peut être mélangé à différents types de charges afin d'en modifier les propriétés. On peut par exemple améliorer ses propriétés mécaniques en ajoutant des charges fibreuses.

L'article de DAVIDSON T ET AL: "Flow response and microstructure of polymers reinforced with discontinuous fibers" Materials Research Society Symposium Proceedings, Materials Research Society, Pittsburg, Pa, US, vol. 289, 1993, pages 231-235, XP009098499 ISSN: 0272-9172, décrit la réponse fluidique et la microstructure de polymères renforcés par des fibres discontinues. Cependant, ce document n'indique nullement le comportement des fibres.

EP 1 870 436 A1 divulgue un comosition comprenant un polyamide de type 66 obtenu par ajout en polymérisation d'un excès d'hexaméthylenediamine et d'acide acétique comprenant 20% des fibres de verre.

WO 00/75232 A1 divulgue de compositions comprenant un polyamide de type 66, du polyphosphate de melamine, de la résine novolac et des fibres de verre de diamètre 10 µm.

WO 2009/037276 A1 divulgue de compositions à base de polyamide 66 comprenant des fibres de verre et de la résine novolac.

La demanderesse a mis en évidence de manière tout à fait surprenante que des articles moulés par injection à partir de compositions polyamides classiques chargées par des fibres, notamment des fibres de verre, présentent des fibres qui sont généralement bien alignées dans la direction de l'injection à proximité de la surface desdits articles, mais qui sont beaucoup moins bien alignées au coeur de l'article par rapport à la direction de l'injection. Or, ce positionnement des fibres au coeur desdits articles provoque une certaine fragilité mécanique et limite le niveau des propriétés mécaniques, notamment la résistance à la traction.

Il existe ainsi un besoin de mettre au point une composition polyamide ne présentant pas les inconvénients mentionnés précédemment.

### INVENTION

La demanderesse a mis au point des compositions polyamides comprenant des fibres qui présentent un bon alignement par rapport à la direction de l'injection en surface ainsi qu'au coeur des articles mis en forme, notamment par moulage par injection. Ce bon alignement des fibres permet d'obtenir des articles polyamides présentant de bonnes propriétés mécaniques, notamment une très bonne résistance à la traction.

La demanderesse a ainsi mis en évidence des compositions polyamides comprenant des fibres présentant des propriétés mécaniques tout à fait remarquables au niveau de la résistance à la traction, ainsi qu'une fluidité en fondu augmentée. Les compositions de l'invention permettent également la réalisation d'articles ayant un excellent aspect de surface, notamment lorsque ceux-ci comprennent un fort taux de charges. Il apparaît de plus que ces compositions sont faciles à mettre en oeuvre dans les procédés de mise en forme, notamment le moulage par injection. De plus, il apparaît que ces compositions à base de polyamide vont conduire à l'obtention d'articles moulés ayant une forte anisotropie du retrait, notamment à cause de l'orientation des charges telles que les fibres de verre.

L'alignement des fibres dans les compositions polyamides selon l'invention est mesuré par une méthode de microtomographie à rayon X de haute résolution sur des éprouvettes moulées par injection.

La présente invention a ainsi pour objet une composition comprenant au moins une matrice polyamide, ledit polyamide étant un polyamide de type 66 obtenu par ajout en polymérisation d'un excès d'hexaméthylènediamine et d'acide acétique ou un polyamide de type 66 obtenu par ajout en polymérisation d'acide acétique présentant une viscosité apparente en phase fondue comprise entre 10 et 80 Pa.s, mesuré selon la norme ISO 11443 à un taux de cisaillement de 1000 s⁻¹ et une température supérieure de 20°C à la température de fusion Tm du polymère mesurée selon la norme ISO 11357-3, et des fibres et permettant la fabrication d'articles ayant une épaisseur maximale de coeur inférieure ou égale à 600 µm selon le test suivant :
a) on procède au moulage par injection de ladite composition pour obtenir une éprouvette haltère de type 1A pour essai de traction selon la norme ISO527-2 en utilisant un seuil d'injection en nappe (slit aperture gating) à l'extrémité de la tête d'éprouvette ; l'éprouvette ayant les dimensions suivantes : longueur de 180 mm, longueur utile de 80 mm, largeur utile de 10 mm et épaisseur de 4 mm; le moulage par injection étant réalisé selon les normes ISO294-1 et ISO1874-2 au moyen d'un moule avec T-runner comprenant 2 empreintes, comme décrit dans l'Annexe A - ISO294-1 ; avec les caractéristiques suivantes :
   - une presse à injecter équipée avec une vis standard de diamètre 35 mm pour thermoplastiques comprenant un profil 3 zones (alimentation, compression, homogénéisation), de rapport L/d égal à 22 et rapport de compression de 2/1 ;
   - une injection à une vitesse de 80 cm3/sec,
   - un temps d'injection de 0,8 sec ;
b) on coupe au milieu de l'éprouvette un cube ; et on l'analyse par microtomographie par rayons X haute résolution de façon à obtenir une succession de radiographies et ainsi reconstituer le volume 3D du cube ;
c) on détermine les angles d'Euler pour chaque fibre dans le volume 3D reconstitué du cube à l'aide d'un logiciel d'analyse d'images :
   - σ (sigma) correspond à l'angle entre une fibre unitaire et sa projection dans le plan de l'éprouvette comprenant la longueur et la largeur de l'éprouvette ;
   - ρ (rho) correspond à l'angle entre la projection d'une fibre dans le plan de l'éprouvette et la direction d'injection ;
   on calcule ensuite la valeur **A** correspondant à la composante a11 du tenseur d'orientation a2 correspondant à la valeur moyenne de **cos² ρ** . **sin² σ** pour l'ensemble des fibres sur toute l'épaisseur de l'éprouvette, et
   on calcule aussi les valeurs **B** correspondants aux composantes a11 , du tenseur d'orientation a2 correspondant à la valeur moyenne de **cos² ρ** . **sin² σ** pour l'ensemble des fibres dans différentes tranches de l'épaisseur de l'éprouvette ;
d) on mesure l'épaisseur maximale de coeur sur un graphique représentant les valeurs B pour chaque tranche de l'épaisseur de l'éprouvette (épaisseur totale de 4 mm) ;
   la peau est la zone située en surface d'une éprouvette pour laquelle la valeur B des fibres est à sa valeur maximale ; c'est-à-dire une zone dans laquelle les fibres sont parfaitement ou presque parfaitement alignées par rapport à la direction d'injection ; le coeur est la zone située au centre d'une éprouvette pour laquelle la valeur B des fibres n'est pas à sa valeur maximale ; c'est-à-dire une zone dans laquelle les fibres sont moins alignées par rapport à la direction d'injection vis-à-vis de la peau ;
   on peut considérer que l'on passe du coeur vers la peau quand la valeur B passe sous une valeur de 0,9 ;
   on mesure l'épaisseur maximale de coeur sur un graphique représentant en ordonnée la composante a11 pour chaque tranche et en abscisse les différentes tranches considérées dans l'épaisseur de l'éprouvette ;
   l'épaisseur maximale correspond sur le graphique à la distance en micromètre qui sépare la diminution, puis l'augmentation de la composante a11 dans l'épaisseur de l'éprouvette.
   L'épaisseur maximale de coeur est une zone dans l'épaisseur des éprouvettes où la valeur B chute de manière significative par rapport à sa valeur en peau.

Dans l'étape a) on procède ainsi à la réalisation d'une éprouvette calibrée préparée dans des conditions précises d'injection qui sont fonction de la nature du polyamide, pour ensuite procéder à une radiocartographie aux rayons X d'un cube prélevé au centre de la longueur utile de l'éprouvette.

Selon le test exposé précédemment, la direction d'injection est parallèle à la longueur de l'éprouvette.

Les paramètres d'injection de l'étape a) les plus importants sont donnés précédemment. On peut aussi mentionner d'autres paramètres qu'un homme de l'art sera parfaitement à même d'optimiser en fonction de la nature du polyamide. Ainsi par exemple, la pression de maintien dans le moule dépend des dimensions de la pièce à mouler, de la viscosité en fondue du polyamide et de l'aspect de surface désiré. De même, le temps de maintien est optimisé par une courbe de poids de la pièce en fonction du temps. Le temps de refroidissement dans le moule dépend par exemple de la vitesse de reprise de rigidité du polyamide.

Pour ce qui concerne la température du fourreau et la température du moule, elles sont celles classiquement utilisées pour les polyamides mis en oeuvre. On peut par exemple réaliser l'injection à une température de fourreau de 20°C supérieure à la température de fusion du polyamide.

Lors de l'étape b), le volume 3D du cube est obtenu par une analyse par microtomographie par rayons X haute résolution permettant d'obtenir une succession de radiographies.

La microtomographie X haute résolution est une technique non destructive qui permet la reconstruction d'images « en coupe » d'un objet à trois dimensions. Elle dévoile toutes les caractéristiques de la microstructure, tel que la présence de différentes phases, d'inclusions, de fissures, ou de pores, qui modifient le coefficient d'atténuation ou l'indice optique le long du cheminement emprunté par un faisceau de rayon X dans le matériau. La microtomographie est une technique de tomographie ayant une résolution de l'ordre du micromètre, notamment inférieure à 2,5 µm.

Son principe repose sur l'analyse multidirectionnelle de l'interaction d'un faisceau de rayons X avec la matière, par enregistrement par des détecteurs du rayonnement transmis après traversée d'un objet.

Les données acquises lors de la prise de mesure, dont la durée varie d'une fraction de secondes à quelques heures selon l'installation, sont collectées suivant des orientations multiples dont le nombre et le pas sont fonction du type d'appareil et de la finesse de résolution. À l'aide de ces données, une image numérique est calculée et reconstruite mathématiquement, en utilisant des algorithmes de reconstruction, en niveaux de gris ou de couleurs dont chacun traduit point par point le coefficient d'atténuation local du faisceau incident. Celui-ci après calibration et étalonnage peut être traduit en échelle de densité.

La microtomographie à rayons X permet donc d'accéder au coeur de la matière pour en apprécier les variations d'absorptions radiologiques et les différences de composition. Elle permet également de localiser très finement les fibres dans le volume d'une composition polyamide.

Une telle technique peut être mise en oeuvre en utilisant un synchrotron de la troisième génération, notamment à l'ESRF (European Synchrotron Radiation Facility). Le terme synchrotron désigne un grand instrument électromagnétique destiné à l'accélération à haute énergie d'électrons.

Différents dispositifs peuvent être utilisés pour l'acquisition des radiographies sous différents angles. Ils sont tous munis d'une source de rayons X, d'une plate-forme de rotation sur laquelle est fixé l'objet et d'un détecteur de rayons X. La solution la plus simple pour digitaliser des images est d'utiliser un détecteur radioscopique 2D à écran fluorescent qui convertit les rayons X en lumière visible, puis de transférer par un système optique approprié le flux de lumière vers une caméra CCD (Charge Coupled Device). L'ensemble du dispositif tomographique doit être soigneusement calibré, notamment l'adaptation de la taille et de la microstructure de l'éprouvette par rapport à la résolution du système, la connaissance de la position de l'axe de rotation de l'échantillon, le nombre de projections utilisées pour reconstruire le volume...

On peut utiliser par exemple à l'étape c) un logiciel d'analyse d'images 3D, tel que par exemple Visilog, ImageJ, ou Aphélion. Comme exposé précédemment, cette étape vise à déterminer la composante a11 qui correspond à la probabilité qu'un ensemble de fibres soit orienté dans la direction d'injection.

On calcule préférentiellement la composante a11 en fonction de la position des fibres dans l'épaisseur totale de l'éprouvette (valeur A) et pour chaque tranche de 100 µm prise dans l'épaisseur de l'éprouvette (valeurs B).

Dans l'étape d), on reconstitue la composante a11 en fonction de l'épaisseur totale de l'éprouvette, qui est de 4 mm, en tenant compte de la taille du cube échantillonné et de la résolution de la technique de microtomographie. On peut ainsi par exemple faire les mesures sur un cube de 2 mm d'arête et reporter les valeurs sur une épaisseur totale de 4 mm.

On entend par polyamide de type 66 un polyamide comprenant au moins 90 % en poids de résidus de monomères acide adipique et hexaméthylènediamine.

Selon l'invention, on utilise un polyamide de type 66 ayant une viscosité apparente en phase fondue comprise entre 10 et 80 Pa.s, notamment entre 15 et 60 Pa.s, encore plus préférentiellement entre 20 et 40 Pa.s, mesuré selon la norme ISO 11443 à un taux de cisaillement de 1000 s⁻¹ et une température supérieure de 20°C à la température de fusion Tm du polymère mesurée selon la norme ISO 11357-3. De tels polyamides permettent d'obtenir un optimum de propriétés en assurant une épaisseur maximale de coeur conforme à la présente invention.

Des polyamides de haute fluidité peuvent notamment être obtenus en contrôlant leur poids moléculaire lors de leur synthèse, et donc leur fluidité en fondue, notamment par l'addition avant ou pendant la polymérisation des monomères de polyamide, c'est-à-dire les monomères pour la fabrication de polyamide de type 66, de monomères modifiant la longueur des chaînes, tel que notamment des composés difonctionnels et/ou monofonctionnels présentent des fonctions amines ou acides carboxyliques capables de réagir avec les monomères du polyamide.

On utilise selon l'invention un polyamide de type 66, c'est-à-dire un polyamide obtenu au moins à partir d'acide adipique et d'hexaméthylène diamine ou de leurs sels tels que l'adipate d'hexaméthylènediamine, pouvant éventuellement comprendre d'autres monomères de polyamide. On utilise selon l'invention comme polyamide un polyamide de type 66 obtenu par ajout en polymérisation d'un excès d'hexaméthylènediamine et d'acide acétique ou un polyamide de type 66 obtenu par ajout en polymérisation d'acide acétique.

Le polyamide selon l'invention peut présenter un poids moléculaire Mn compris entre 3000 et 17000 g/mol, préférentiellement entre 11000 et 17000, plus préférentiellement entre 11000 et 15000 et encore plus préférentiellement entre 12000 et 14500.

Il peut aussi présenter un indice de polydispersité (D=Mw/Mn) inférieur ou égal à 2.

La composition selon l'invention peut comprendre entre 20 et 80 % en poids, préférentiellement entre 20 et 60 % en poids, et plus préférentiellement entre 35 et 55% en poids de polyamide, par rapport au poids total de la composition.

La polymérisation du polyamide de l'invention est notamment réalisée selon les conditions opératoires classiques de polymérisation des polyamides, de manière continue ou discontinue.

Un tel procédé de polymérisation peut comprendre brièvement :
- un chauffage sous agitation et sous pression du mélange des monomères du polyamide, et éventuellement des composés multifonctionnels ; difonctionnels et/ou monofonctionnels,
- un maintien du mélange sous pression et température pendant une durée déterminée, avec élimination de vapeur d'eau par un dispositif approprié, puis décompression et maintien pendant une durée déterminée à une température supérieure au point de fusion du mélange, notamment sous pression autogène de vapeur d'eau, sous azote ou sous vide, pour ainsi continuer la polymérisation par élimination de l'eau formée.

En sortie de polymérisation, le polymère peut être refroidi avantageusement par de l'eau, et extrudé sous forme de joncs. Ces joncs sont coupés pour produire des granulés.

On peut utiliser comme paramètres de moulage par injection pour l'étape a) du test mentionné précédemment les caractéristiques suivantes pour un polyamide de type 66 :
- une presse à injecter équipée avec une vis standard de diamètre 35 mm, de rapport L/d égal à 22 et rapport de compression de 2/1.
- une température du fourreau comprise entre 270 et 290 °C, avec profil croissant.
- un moule de type T, selon la norme ISO 294-1 Annexe A, comprenant 2 empreintes à une température de 120 °C.
- une injection à une vitesse de 80 cm³/seconde et un volume total injecté de 40 cm³, avec un matelas d'environ 5-7 cm³.
- une pression spécifique d'injection maximale de 1300 bar, une pression spécifique de compactage (packing, ou seconde pression) de 450 bar, et une contre-pression spécifique de 100 bar.
- une vitesse de rotation de la vis de 80 tours/minute
- un temps d'injection de 0,8 s, un temps de compactage de 9 s, un temps de refroidissement de 12 s, un temps de plastification de 8 s et un temps total du cycle de 32 s.

On peut utiliser comme paramètres de moulage par injection pour l'étape a) du test mentionné précédemment les caractéristiques suivantes pour un polyamide de type 6 :
- une presse à injecter équipée avec une vis standard de diamètre 35 mm, de rapport L/d égal à 22 et rapport de compression de 2/1.
- une température du fourreau comprise entre 240 et 250 °C, avec profil croissant.
- un moule de type T, selon la norme ISO 294-1 Annexe A, comprenant 2 empreintes à une température de 120 °C.
- une injection à une vitesse de 80 cm³/seconde et un volume totale injecté de 40 cm³, avec un matelas d'environ 5-7 cm³.
- une pression spécifique d'injection maximale de 1300 bar, une pression spécifique de compactage (packing, ou seconde pression) de 450 bar, et une contre-pression spécifique de 100 bar.
- une vitesse de rotation de la vis de 80 tours/minute
- un temps d'injection de 0,8 s, un temps de compactage de 9 s, un temps de refroidissement de 12 s, un temps de plastification de 8 s et un temps total du cycle de 32 s.

Comme fibres, on utilise préférentiellement des charges fibreuses de type minéral, telles que des fibres de verre ou des fibres de carbone, ou des fibres organiques, comme par exemple des fibres de synthèse telles que des fibres d'aramide ou de polyester, ou des fibres naturelles, telles que le chanvre et le lin.

On préfère notamment utiliser les fibres de renfort, telles que les fibres de verre. De façon préférentielle, la fibre la plus utilisée est la fibre de verre, de type dit coupé (chopped), ayant un diamètre compris entre 7 et 14 µm, préférentiellement de 10 à 14 µm. Les fibres de verre coupées ont notamment une longueur inférieure à 5 mm, notamment comprise entre 0,1 et 5 mm. Ces charges peuvent présenter un ensimage surfacique qui assure l'adhésion mécanique entre les fibres et la matrice polyamide, notamment en condition environnementale critique, tel que par exemple, en contact avec les fluides des moteurs.

La composition peut notamment comprendre de 20 à 80 % en poids de fibres, plus préférentiellement de 40 à 80 % en poids de fibres, et encore plus préférentiellement de 45 à 65 % en poids, par rapport au poids total de la composition.

La composition peut également comprendre des charges non fibreuses, telles que des charges particulaires, lamellaires et/ou les nanocharges exfoliables ou non exfoliables comme l'alumine, le noir de carbone, les argiles, le phosphate de zirconium, le kaolin, le carbonate de calcium, le cuivre, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

La composition selon l'invention peut comprendre ou non des agents modificateurs du choc, notamment ceux présentant une base élastomérique comprenant des groupements fonctionnels réactifs avec le polyamide.

La composition peut comprendre, outre le polyamide modifié de l'invention, un ou plusieurs autres polymères, de préférence polyamides ou copolyamides.

La composition selon l'invention peut en outre comprendre des additifs usuellement utilisés pour la fabrication de compositions polyamides. Ainsi, on peut citer les lubrifiants, les agents ignifugeants, les plastifiants, les agents nucléants, les catalyseurs, les stabilisants lumière et/ou thermique, les antioxydants, les antistatiques, les colorants, les matifiants, les additifs d'aide au moulage ou autres additifs conventionnels.

Ces charges et additifs peuvent être ajoutés au polyamide modifié par des moyens usuels adaptés à chaque charge ou additif, tel que par exemple lors de la polymérisation ou en mélange en fondu.

Les compositions polyamides sont généralement obtenues par mélange des différents composés entrant dans la composition, notamment le polyamide et les fibres, à froid ou en fondue. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, puis fondue et soumise à une force de cisaillement, et véhiculée. De tels dispositifs sont parfaitement connus de l'homme du métier.

Selon un premier mode de réalisation, on mélange tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important.

On peut, selon des modes de réalisations particuliers, effectuer des pré-mélanges, en fondu ou non, de certains des composés avant préparation de la composition finale.

La composition selon l'invention, lorsqu'elle est préparée à l'aide d'un dispositif d'extrusion est de préférence conditionnée sous forme de granulés. Les granulés sont destinés à être mis en forme à l'aide de procédés impliquant une fusion pour l'obtention d'articles. Les articles sont ainsi constitués de la composition. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de mise en forme, notamment de moulage par injection.

La composition selon l'invention peut être utilisée pour tout procédé de mise en forme des matières plastiques, tels que par exemple le procédé de moulage, notamment le moulage par injection, l'extrusion, l'extrusion soufflage, ou encore le rotomoulage.

La présente invention concerne notamment un procédé de moulage par injection dans lequel on introduit dans un dispositif de moulage par injection une composition selon l'invention et l'on procède au moulage.

Ledit procédé peut notamment être réalisé en absence, ou bien en présence d'un fluide à l'état supercritique pour la réalisation d'articles microcellulaires.

La présente invention concerne également des articles obtenus à partir de la composition selon l'invention.

L'utilisation des compositions selon l'invention est particulièrement intéressante dans le cadre de la fabrication d'articles pour l'industrie automobile ou électrique, tels que par exemple des ailes de voitures, des disjoncteurs ou des capots de protection.

La différence de distribution des fibres sur des éprouvettes de type haltère selon l'invention est également observée sur d'autres géométries de pièces ; permettant ainsi à ces pièces de présenter de meilleures propriétés mécaniques.

Les granulés selon l'invention obtenus comme décrit précédemment comprennent notamment des fibres présentant une longueur moyenne comprise entre 20 µm et 2 mm. Les articles selon l'invention obtenus comme décrit précédemment, notamment par moulage pas injection, comprennent des fibres présentant une longueur moyenne comprise entre 20 µm et 500 µm.

Des termes spécifiques sont utilisés dans la description de manière à faciliter la compréhension du principe de l'invention. Il doit néanmoins être compris qu'aucune limitation de la portée de l'invention n'est envisagée par l'utilisation de ces termes spécifiques. Le terme et/ou inclut les significations et, ou, ainsi que toutes les autres combinaisons possibles des éléments connectés à ce terme.

D'autres détails ou avantages de l'invention apparaîtront plus clairement au vu des exemples ci-dessous, donnés uniquement à titre indicatif.

### PARTIE EXPERIMENTALE

Les composés utilisés sont les suivants :
- PA1: Polyamide 66 ayant un MFI de 4,5 g/10 minutes (selon la norme ISO1133 mesuré à 275°C sous 325 g de charge) et un IV de 135 ml/g selon la norme ISO 307. Teneurs en groupements terminaux amines (GTA) et acide carboxyliques (GTC) déterminées par dosages potentiométriques après dissolution du polyamide (une méthode est par exemple décrite dans "Encyclopedia of Industrial Chemical Analysis", volume 17, page 293, 1973): GTA = 50 meq/kg, GTC = 80 meq/kg. La viscosité apparente en phase fondue, selon la norme ISO 11443, mesuré à 285 °C (Tm + 20 °C) et à 1000 s⁻¹, est de 120 Pa.s.
- PA2 : Polyamide 66 ayant un MFI de 30 g/10 minutes et un IV de 98 ml/g. Teneurs en groupements terminaux suivants : GTA = 30 meq/kg, GTC = 93 meq/kg. Obtenu par ajout en début de polymérisation de 0,5% molaire d'acide acétique. La viscosité apparente en phase fondue, selon la norme ISO 11443, mesuré à 285 °C (Tm + 20 °C) et à 1000 s⁻¹, est de 30 Pa.s.

- PA3: Polyamide 66 ayant un MFI de 27 g/10 minutes et un IV de 101 ml/g. Teneurs en groupements terminaux suivants : GTA = 50 meq/kg, GTC = 65 meq/kg. Obtenu par ajout en début de polymérisation de 0,6% molaire d'acide acétique et de 0,4% molaire de hexaméthylènediamine. La viscosité apparente en phase fondue, selon la norme ISO 11443, mesuré à 285 °C (Tm + 20 °C) et à 1000 s⁻¹, est de 34 Pa.s.
- Fibres de verre : Vetrotex 995
- Stabilisant chaleur : Cul et KI (respectivement <0,02% et <0,1%) en fraction de masse
- Additifs : cire EBS, et nigrosine vendu sous la dénomination 54/1033 par la société Ferroplast.

Les compositions sont préparées par mélange en phase fondue, à l'aide d'une extrudeuse bi-vis de type WERNER et PFLEIDERER ZSK, des polyamides, de 50 % en poids de fibres de verre, et de 1,5 % en poids d'additifs. Les conditions d'extrusion sont les suivantes : Température: entre 240 et 280°C, Vitesse de rotation: entre 200 et 300 tours/min, Débit entre 25 et 60 kg/heure.

La résistance à traction est mesurée selon la norme ISO 527 sur des éprouvettes haltères de type 1A pour essai de traction telles que définies dans la norme ISO527-2. Les éprouvettes présentent les dimensions suivantes : longueur de 180 mm, longueur utile de 80 mm, largeur totale de 20 mm, largeur utile de 10 mm et épaisseur de 4 mm.

On procède au moulage par injection de ladite composition pour obtenir une éprouvette haltère de type 1A pour essai de traction selon la norme ISO527-2 en utilisant un seuil d'injection en nappe (slit aperture gating) à l'extrémité de la tête d'éprouvette ; l'éprouvette ayant les dimensions suivantes : longueur de 180 mm, longueur utile de 80 mm, largeur totale de 20 mm, largeur utile de 10 mm et épaisseur de 4 mm ; le moulage par injection étant réalisé selon les normes ISO294-1 et ISO1874-2 ; avec les caractéristiques suivantes :
- une presse à injecter Demag Ergotech Viva 50T équipée avec une vis standard de diamètre 35 mm, de rapport L/d égal à 22 et rapport de compression de 2/1.
- une température du fourreau comprise entre 270 et 290 °C, avec profil croissant.
- un moule de type T, selon la norme ISO 294-1 Annexe A, comprenant 2 empreintes à une température de 120 °C.
- une injection à une vitesse de 80 cm³/seconde et un volume totale injecté de 40 cm³, avec un matelas d'environ 5-7 cm³.
- une pression spécifique d'injection maximale de 1300 bar, une pression spécifique de compactage (packing, ou seconde pression) de 450 bar, et une contre-pression spécifique de 100 bar.
- une vitesse de rotation de la vis de 80 tours/minute
- un temps d'injection de 0,8 s, un temps de compactage de 9 s, un temps de refroidissement de 12 s, un temps de plastification de 8 s et un temps total du cycle de 32 s.

Les mesures d'orientation des fibres de verre sont réalisées par microtomographie, réalisées à l'ESRF de Grenoble en France sur la ligne ID19 avec une résolution spatiale de 1,4 µm sur des cubes de 2 mm découpés au centre des éprouvettes haltères.

Chaque fibre est caractérisée dans l'espace par ses angles d'Euler ρ (phi) et σ (thêta). L'orientation des fibres est caractérisée pour chaque tranche de 100 µm obtenue sur l'épaisseur par un tenseur d'orientation d'ordre 2 a2, dont la première composante a11 (valeur B) correspond à la valeur moyenne de cos²(ρ).sin²(σ) pour l'ensemble des fibres ; c'est-à-dire la probabilité que les fibres de verre soient alignées dans la direction d'injection dans la tranche d'épaisseur considérée. L'orientation des fibres est également caractérisée pour l'épaisseur totale de l'éprouvette par un tenseur d'orientation d'ordre 2 a2, dont la première composante a11 (valeur A) correspond à la valeur moyenne de cos²(ρ).sin²(σ) pour l'ensemble des fibres ; c'est-à-dire la probabilité que les fibres de verre soient alignées dans la direction d'injection dans l'épaisseur totale de l'éprouvette.

On mesure alors l'épaisseur maximale de coeur des éprouvettes sur un graphique représentant a11 pour chaque tranche de 100 µm (valeur B) en fonction de la position de la tranche dans l'épaisseur de l'éprouvette ; au total 4 mm.

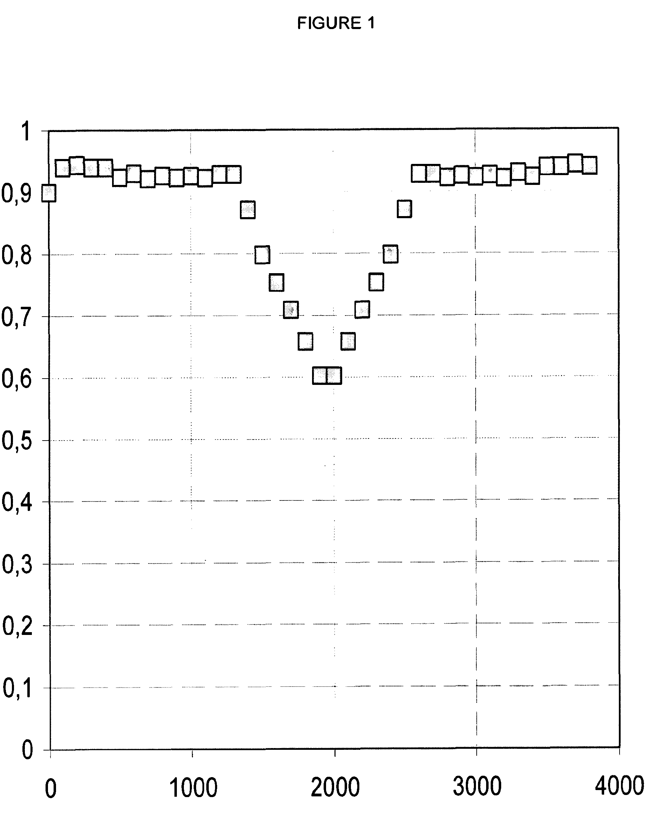

La Figure 1 représente la valeur B pour chaque tranche de 100 µm en fonction de la position de la tranche dans l'épaisseur de l'éprouvette, pour la composition C1. La Figure 2 représente la valeur B pour chaque tranche de 100 µm en fonction de la position de la tranche dans l'épaisseur de l'éprouvette, pour la composition 2.

Le test spiral permet de quantifier la fluidité des compositions en mettant en fusion les granulés et en les injectant dans un moule en forme de spirale à section rectangulaire d'épaisseur 2 mm et de largeur 4 cm, dans une presse BM-Biraghi 85T à une température de fourreau de 275°C, une température de moule de 80°C et avec une pression d'injection maximale de 130 bars, ce qui correspond à un temps d'injection d'environ 0,4 secondes. Le résultat est exprimé en longueur de moule remplie correctement par la composition.

La température de fusion a été mesuré selon la norme ISO 11357-3 (DSC « METTLER DSC 20 », avec une augmentation de température de 10°C/min).

L'analyse de rhéomètre capillaire a été effectué selon la norme ISO 11443 sur les granulés secs à l'aide d'un rhéomètre GÖTTFERT RHEOGRAPH 2002, avec notamment un transducteur de 1000 bar, capillaire type Roundhole 30mm x 1mm en diamètre, avec un piston de 12 mm en diamètre et vitesse (mm/sec) : 0,01 ; 0,02 ; 0,05 ; 0,1 ; 0,2 ; 0,5 ; 1,0 ; 2,0 ; 5,0.

Les résultats sont mentionnés dans le Tableau 1 :

**Tableau 1**

| **Compositions** | **C1** | **1** | **2** |
|---|---|---|---|
| PA 1 | 48,5 | | |
| PA 2 | | 48,5 | |
| PA 3 | | | 48,5 |
| Additifs différents (CuI, KI, cire, nigrosine, etc) | 1,5 | 1,5 | 1,5 |
| Fibres de verre | 50 | 50 | 50 |
| Total | 100 | 100 | 100 |
| | | | |
| Taux de cendre ISO 3451/1A 30 min à 750°C (%) | 49,8 | 50,1 | 50,1 |
| IV ISO 307 (ml/g) | 135 | 98 | 101 |
| Point de fusion ISO 11357-3 (°C) | 263,8 | 264,3 | 265,63 |
| Température de cristallisation ISO 11357-3 (°C) | 223,5 | 225,5 | 225,28 |
| Résilience Charpy avec entailles ISO 179\1eA (KJ/m²) | 13,6 | 14,1 | 14,3 |
| Résilience Charpy sans entaille ISO 179\1eU (KJ/m²) | 95,6 | 101,3 | 103,2 |
| Résilience Charpy sans entaille ISO 179\1eU (KJ/m²) après 1000 heures à 150°C | 53,5 | 61,2 | 57,9 |
| Résistance à la traction ISO 527 (N/mm²) | 223 | 251 | 248 |
| Allongement à la traction ISO 527 (%) | 2,8 | 2,8 | 2,9 |
| Module de traction ISO 527 (N/mm²) | 16,6 | 16,8 | 16,9 |
| Test spirale (cm) | 19 | 27 | 25 |
| Epaisseur du "coeur" des barreaux haltère (µm) | 1200 | 400 | 500 |
| Valeur A | 0,89 | 0,94 | 0,93 |
| Longueur moyenne des fibres de verre (µm) ± déviation standard | 200 ± 106 | 198 ± 118 | 215 ± 125 |
| Aspect de surface | mauvais | bon | bon |

On observe ainsi que les matériaux 1 et 2 présentent un coeur d'éprouvette plus petit et des fibres de verres plus alignées dans la direction de l'injection, ainsi qu'une résistance à la traction bien plus élevée par rapport à l'essai comparatif.

Il faut noter que la longueur moyenne des fibres de verre est, statistiquement, la même pour tous les trois matériaux, donc ce paramètre ne peut pas expliquer la différence des propriétés mécaniques observée.

## Revendications

1. Composition comprenant au moins une matrice polyamide, ledit polyamide étant un polyamide de type 66 obtenu par ajout en polymérisation d'un excès d'hexaméthylènediamine et d'acide acétique ou un polyamide de type 66 obtenu par ajout en polymérisation d'acide acétique présentant une viscosité apparente en phase fondue comprise entre 10 et 80 Pa.s, mesurée selon la norme ISO 11443 à un taux de cisaillement de 1000 s⁻¹ et une température supérieure de 20°C à la température de fusion Tm du polymère mesurée selon la norme ISO 11357-3, et des fibres et permettant la fabrication d'articles ayant une épaisseur maximale de coeur inférieure ou égale à 600 µm selon le test suivant :
a) on procède au moulage par injection de ladite composition pour obtenir une éprouvette haltère de type 1A pour essai de traction selon la norme IS0527-2 en utilisant un seuil d'injection en nappe (slit aperture gating) à l'extrémité de la tête d'éprouvette ; l'éprouvette ayant les dimensions suivantes : longueur de 180 mm, longueur utile de 80 mm, largeur utile de 10 mm et épaisseur de 4 mm ; le moulage par injection étant réalisé selon les normes IS0294-1 et ISO 1874-2 au moyen d'un moule avec T-runner comprenant 2 empreintes, comme décrit dans l'Annexe A - IS0294-1 ; avec les caractéristiques suivantes :
- une presse à injecter équipée avec une vis standard de diamètre 35 mm pour thermoplastiques comprenant un profil 3 zones (alimentation, compression, homogénéisation), de rapport L/d égal à 22 et rapport de compression de 2/1.
- une injection à une vitesse de 80 cm3/sec,
- un temps d'injection de 0,8 sec ;
b) on coupe au milieu de l'éprouvette un cube ; et on l'analyse par microtomographie par rayons X haute résolution de façon à obtenir une succession de radiographies et ainsi reconstituer le volume 3D du cube ;
c) on détermine les angles d'Euler pour chaque fibre dans le volume 3D reconstitué du cube à l'aide d'un logiciel d'analyse d'images :
- σ (sigma) correspond à l'angle entre une fibre unitaire et sa projection dans le plan de l'éprouvette comprenant la longueur et la largeur de l'éprouvette
- ρ (rho) correspond à l'angle entre la projection d'une fibre dans le plan de l'éprouvette et la direction d'injection ;
on calcule ensuite la valeur **A** correspondant à la composante a11 du tenseur d'orientation a2 correspondant à la valeur moyenne de **cos² ρ** . **sin² σ** pour l'ensemble des fibres sur toute l'épaisseur de l'éprouvette, et
on calcul aussi les valeurs **B** correspondants aux composantes a11, du tenseur d'orientation a2 correspondant à la valeur moyenne de **cos² ρ** . **sin² σ** pour l'ensemble des fibres dans différentes tranches de l'épaisseur de l'éprouvette ;
d) on mesure l'épaisseur maximale de coeur sur un graphique représentant les valeurs B pour chaque tranche de l'épaisseur de l'éprouvette (épaisseur totale de 4 mm) ;
la peau est la zone située en surface d'une éprouvette pour laquelle la valeur B des fibres est à sa valeur maximale ; c'est-à-dire une zone dans laquelle les fibres sont parfaitement ou presque parfaitement alignées par rapport à la direction d'injection ;
le coeur est la zone située au centre d'une éprouvette pour laquelle la valeur B des fibres n'est pas à sa valeur maximale ; c'est-à-dire une zone dans laquelle les fibres sont moins alignées par rapport à la direction d'injection vis-à-vis de la peau ;
on peut considérer que l'on passe du coeur vers la peau quand la valeur B passe sous une valeur de 0,9 ;
on mesure l'épaisseur maximale de coeur sur un graphique représentant en ordonnée la composante a11 pour chaque tranche et en abscisse les différentes tranches considérées dans l'épaisseur de l'éprouvette ; l'épaisseur maximale correspond sur le graphique à la distance en micromètre qui sépare la diminution, puis l'augmentation de la composante a11 dans l'épaisseur de l'éprouvette.

2. Composition selon la revendication 1, **caractérisée en ce que** le polyamide présente un poids moléculaire Mn compris entre 3000 et 17000 g/mol.

3. Composition selon la revendication 1 ou 2, **caractérisée en ce que** le polyamide est obtenu par mélange d'un polyamide avec un autre polyamide, ou d'un polyamide avec un oligomère de polyamide, ou encore d'un polyamide avec des monomères modifiant la longueur des chaînes.

4. Composition selon l'une quelconque des revendications 1 à 3, **caractérisée en ce que** ladite composition comprend de 20 à 80 % en poids de polyamide, par rapport au poids total de la composition.

5. Composition selon l'une quelconque des revendications 1 à 4, **caractérisée en ce que** les paramètres pour le moulage par injection pour l'étape a) sont les suivante pour un polyamide de type 66 :
- une presse à injecter équipée avec une vis standard de diamètre 35 mm, de rapport L/d égal à 22 et rapport de compression de 2/1.
- une température du fourreau comprise entre 270 et 290 °C, avec profil croissant.
- un moule de type T, selon la norme ISO 294-1 Annexe A, comprenant 2 empreintes à une température de 120 °C.
- une injection à une vitesse de 80 cm³/seconde et un volume total injecté de 40 cm³, avec un matelas d'environ 5-7 cm³.
- une pression spécifique d'injection maximale de 1300 bar, une pression spécifique de compactage (packing, ou seconde pression) de 450 bar, et une contre-pression spécifique de 100 bar.
- une vitesse de rotation de la vis de 80 tours/minute
- un temps d'injection de 0,8 s, un temps de compactage de 9 s, un temps de refroidissement de 12 s, un temps de plastification de 8 s et un temps total du cycle de 32 s.

6. Composition selon l'une quelconque des revendications 1 à 5, **caractérisée en ce que** les fibres sont des fibres de renfort.

7. Composition selon l'une quelconque des revendications 1 à 6, **caractérisée en ce que** les fibres sont des fibres de verre.

8. Composition selon l'une quelconque des revendications 1 à 7, **caractérisée en ce que** ladite composition comprend de 20 à 80 % en poids de fibres, par rapport au poids total de la composition.

9. Procédé de fabrication d'une composition selon l'une quelconque des revendications 1 à 8, par mélange d'au moins le polyamide et les fibres, a froid ou en fondue.

10. Procédé de moulage par injection d'un article dans lequel on introduit dans un dispositif de moulage par injection une composition selon l'une quelconque des revendications 1 à 9, et l'on procède au moulage.

11. Article obtenu par mise en forme d'une composition selon l'une quelconque des revendications 1 à 8.

## Patentansprüche

1. Zusammensetzung, die mindestens eine Polyamidmatrix umfasst, wobei das Polyamid ein Polyamid 66 ist, das durch Zugabe eines Überschusses an Hexamethylendiamin und Essigsäure während der Polymerisation erhalten wird, oder ein Polyamid 66, das durch Zugabe von Essigsäure während der Polymerisation erhalten wird, die eine scheinbare Schmelzviskosität zwischen 10 und 80 Pa·s aufweist, gemessen nach der Norm ISO 11443 bei einer Schergeschwindigkeit von 1000 s⁻¹ und einer Temperatur von 20°C über der Schmelztemperatur Tm des Polymers, gemessen nach der Norm ISO 11357-3, sowie Fasern umfasst und die die Herstellung von Artikeln mit einer maximalen Kerndicke von kleiner gleich 600 µm gemäß folgendem Test aufweist:
a) Spritzgießen der Zusammensetzung zum Erhalten eines hantelförmigen Probekörpers Typ 1A für einen Zugversuch nach Norm ISO 527-2 unter Verwendung eines flächigen Angusses (slit aperture gating) am Ende des Probekörperkopfs; wobei der Probekörper folgende Abmessungen aufweist: Länge 180 mm, Nutzlänge 80 mm, Nutzbreite 10 mm und Dicke 4 mm; wobei das Spritzgießen nach Norm ISO 294-1 und ISO 1874-2 mit einer Form mit T-Angusskanal mit 2 Höhlungen, wie in Anhang A - ISO 294-1 beschrieben, erfolgt; mit folgenden Eigenschaften:
- eine Spritzgießmaschine, die mit einer Standardschnecke mit einem Durchmesser von 35 mm für thermoplastische Werkstoffe mit einem Dreizonenprofil (Einzug, Kompression, Homogenisierung), einem Verhältnis L/d gleich 22 und einem Kompressionsverhältnis von 2/1 ausgerüstet ist,
- Einspritzgeschwindigkeit 80 cm³/s,
- Einspritzdauer 0,8 s;
b) Herausschneiden eines Würfels aus der Mitte des Probekörpers und Analysieren mittels hochauflösender Röntgenmikrotomographie zum Erhalten einer Abfolge von Röntgenaufnahmen und somit zum Erstellen des 3D-Volumens des Würfels;
c) Ermitteln der Euler-Winkel für jede Faser in dem erstellten 3D-Volumen des Würfels mit einer Bildanalysesoftware:
- σ (Sigma) entspricht dem Winkel zwischen einer Einzelfaser und ihrer Projektion in die Ebene des Probekörpers, die die Länge und Breite des Probekörpers umfasst,
- ρ (Rho) entspricht dem Winkel zwischen der Projektion einer Faser in die Ebene des Probekörpers und der Einspritzrichtung;
anschließend Berechnen von Wert A, der der Komponente a11 des Richtungstensors a2 entspricht, der dem Mittelwert von cos²ρ·sin²σ für die Gesamtheit der Fasern über die gesamte Dicke des Probekörpers entspricht, und
ebenfalls Berechnen der Werte B, die den Komponenten a11 des Richtungstensors a2 entsprechen, der dem Mittelwert von cos²ρ·sin²σ für die Gesamtheit der Fasern in unterschiedlichen Scheiben der Dicke des Probekörpers entspricht;
d) Messen der maximalen Kerndicke in einer Grafik, die die Werte B für jede Scheibe der Dicke des Probekörpers darstellt (Gesamtdicke 4 mm);
die Haut ist der Bereich, der an der Oberfläche eines Probekörpers liegt, bei dem der Wert B der Fasern seinen Höchstwert aufweist; das heißt ein Bereich, in dem die Fasern bezogen auf die Einspritzrichtung perfekt oder beinahe perfekt ausgerichtet sind;
der Kern ist der Bereich, der sich in der Mitte eines Probekörpers befindet, bei dem der Wert B der Fasern nicht seinen Höchstwert aufweist; das heißt ein Bereich, in dem die Fasern bezogen auf die Einspritzrichtung gegenüber der Haut weniger stark ausgerichtet sind;
es kann angenommen werden, dass der Kern in die Haut übergeht, wenn der Wert B unter einen Wert von 0,9 fällt;
Messen der maximalen Kerndicke in einer Grafik, die auf der Ordinate die Komponente a11 für jede Scheibe und auf der Abszisse die verschiedenen in der Dicke des Probenkörpers berücksichtigten Scheiben darstellt; die maximale Dicke entspricht in der Grafik dem Abstand in Mikrometern, der die Verkleinerung und dann die Vergrößerung von der Komponente a11 in der Dicke des Probenkörpers trennt.

2. Zusammensetzung nach Anspruch 1, **dadurch gekennzeichnet, dass** das Polyamid eine molare Masse Mn zwischen 3000 und 17000 g/mol aufweist.

3. Zusammensetzung nach Anspruch 1 oder 2, **dadurch gekennzeichnet, dass** das Polyamid durch Mischen eines Polyamids mit einem anderen Polyamid oder eines Polyamids mit einem Polyamid-Oligomer oder auch eines Polyamids mit Monomeren erhalten wird, die die Kettenlänge modifizieren.

4. Zusammensetzung nach einem der Ansprüche 1 bis 3, **dadurch gekennzeichnet, dass** die Zusammensetzung bezogen auf das Gesamtgewicht der Zusammensetzung 20 bis 80 Gewichts-% Polyamid umfasst.

5. Zusammensetzung nach einem der Ansprüche 1 bis 4, **dadurch gekennzeichnet, dass** zum Spritzgießen für Schritt a) bei einem Polyamid 66 folgende Parameter gelten:
- eine Spritzgießmaschine, die mit einer Standardschnecke mit einem Durchmesser von 35 mm, einem Verhältnis L/d gleich 22 und einem Kompressionsverhältnis von 2/1 ausgerüstet ist,
- Zylindertemperatur zwischen 270 und 290 °C, mit ansteigendem Profil,
- eine Form vom Typ T nach Norm ISO 294-1 Anhang A, die 2 Höhlungen bei einer Temperatur von 120 °C umfasst,
- Einspritzgeschwindigkeit 80 cm³/s und eingespritztes Gesamtvolumen von 40 cm³, mit einem Restmassepolster von ungefähr 5 bis 7 cm³,
- maximaler spezifischer Einspritzdruck 1300 bar, spezifischer Druck beim Nachdrücken (packing, oder zweiter Druck) 450 bar und spezifischer Gegendruck 100 bar,
- Schneckendrehzahl 80 Umdrehungen/Minute
- Einspritzdauer 0,8 s, Nachdruckdauer 9 s, Kühldauer 12 s, Plastifizierungsdauer 8 s sowie Gesamtzyklusdauer 32 s.

6. Zusammensetzung nach einem der Ansprüche 1 bis 5, **dadurch gekennzeichnet, dass** die Fasern Verstärkungsfasern sind.

7. Zusammensetzung nach einem der Ansprüche 1 bis 6, **dadurch gekennzeichnet, dass** die Fasern Glasfasern sind.

8. Zusammensetzung nach einem der Ansprüche 1 bis 7, **dadurch gekennzeichnet, dass** die Zusammensetzung bezogen auf das Gesamtgewicht der Zusammensetzung 20 bis 80 Gewichts-% Fasern umfasst.

9. Verfahren zur Herstellung einer Zusammensetzung nach einem der Ansprüche 1 bis 8 durch Mischen von zumindest dem Polyamid und den Fasern, im kalten oder geschmolzenen Zustand.

10. Verfahren zum Spritzgießen eines Artikels, in dem eine Zusammensetzung nach einem der Ansprüche 1 bis 9 in eine Spritzgießvorrichtung eingebracht wird und die Formung erfolgt.

11. Artikel, der durch Formgebung einer Zusammensetzung nach einem der Ansprüche 1 bis 8 erhalten ist.

## Claims

1. Composition comprising at least one polyamide matrix, said polyamide being being a polyamide of type PA-6,6 obtained by addition, during polymerization, of an excess of hexamethylenediamine and of acetic acid or a polyamide of type PA-6,6 obtained by addition, during polymerization, of acetic acid, having an apparent melt viscosity between 10 and 80 Pa.s, measured according to standard ISO 11443 at a shear rate of 1000 s⁻¹ and a temperature 20°C above the melting temperature Tₘ of the polymer measured according to the standard ISO 11357-3, and fibers and enabling the manufacture of articles that have a maximum core thickness of less than or equal to 600 µm according to the following test:
a) said composition is injection molded in order to obtain a dumbbell test specimen of type 1A for a tensile test according to the standard ISO 527-2 using a slit aperture gating at the end of the head of the test specimen; the test specimen having the following dimensions: length of 180 mm, working length of 80 mm, working width of 10 mm and thickness of 4 mm; the injection molding being carried out according to the standards ISO 294-1 and ISO 1874-2 by means of a mold with a T-runner comprising two cavities, as described in Annex A - ISO 294-1; with the following characteristics:
- an injection-molding press equipped with a standard screw having a diameter of 35 mm for thermoplastics comprising a three-zone profile (feed, compression, homogenization), having an L/d ratio equal to 22 and a compression ratio of 2/1;
- injection at a speed of 80 cm³/s;
- an injection time of 0.8 s;
b) a cube is cut from the middle of the test specimen and analyzed by high-resolution X-ray microtomography so as to obtain a succession of radiographs and thus reconstruct the 3D volume of the cube;
c) the Euler angles are determined for each fiber in the reconstructed 3D volume of the cube using image analysis software:
- σ (sigma) corresponds to the angle between a single fiber and its projection in the plane of the test specimen comprising the length and the width of the test specimen;
- ρ (rho) corresponds to the angle between the projection of a fiber in the plane of the test specimen and the injection direction;
the value **A** is then calculated that corresponds to the component a11 of the orientation tensor a2 corresponding to the average value of **cos² ρ** . **sin² σ** for all of the fibers throughout the thickness of the test specimen, and
the values **B** are also calculated that correspond to the components a11 of the orientation tensor a2 corresponding to the average value of **cos² ρ** . **sin² σ** for all of the fibers in various slices of the thickness of the test specimen;
d) the maximum core thickness is measured on a graph that represents the values B for each slice of the thickness of the test specimen (total thickness of 4 mm);
the skin is the zone situated at the surface of a test specimen for which the value B of the fibers is at its maximum value; that is to say a zone in which the fibers are perfectly or almost perfectly aligned relative to the injection direction;
the core is the zone situated at the center of a test specimen for which the value B of the fibers is not at its maximum value; that is to say a zone in which the fibers are less aligned relative to the injection direction with respect to the skin; it may be considered that the passage from the core to the skin takes place when the value B passes below a value of 0.9;
the maximum core thickness is measured on a graph that represents, on the y-axis, the component a11 for each slice and, on the x-axis, the various slices considered in the thickness of the test specimen; the maximum thickness corresponds, on the graph, to the distance in micrometers that separates the reduction, then the increase of the component a11 in the thickness of the test specimen.

2. Composition according to Claim 1, **characterized in that** the polyamide has a molecular weight Mₙ between 3000 and 17 000 g/mol.

3. Composition according to Claim 1 or 2, **characterized in that** the polyamide is obtained by blending one polyamide with another polyamide, or one polyamide with one polyamide oligomer, or else one polyamide with monomers that modify the length of the chains.

4. Composition according to any one of Claims 1 to 3, **characterized in that** said composition comprises from 20 to 80% by weight of polyamide, relative to the total weight of the composition.

5. Composition according to any one of claims 1 to 4, **characterized in that** the parameters for the injection molding for step a) are the following for a polyamide of PA-6,6 type:
- an injection molding press equipped with a standard screw having a diameter of 35 mm, an L/d ratio equal to 22 and a compression ratio of 2/1;
- a barrel temperature between 270 and 290°C, with increasing profile;
- a mold of T type, according to the standard ISO 294-1 Annex A, comprising two cavities at a temperature of 120°C;
- injection at a speed of 80 cm³/s and a total injected volume of 40 cm³, with a cushion of around 5-7 cm³;
- a specific maximum injection pressure of 1300 bar, a specific packing pressure (or second pressure) of 450 bar, and a specific back pressure of 100 bar;
- a screw rotation speed of 80 rpm; and
- an injection time of 0.8 s, a packing time of 9 s, a cooling time of 12 s, a plasticization time of 8 s and a total cycle time of 32 s.

6. Composition according to any one of Claims 1 to 5, **characterized in that** the fibers are reinforcing fibers.

7. Composition according to any one of Claims 1 to 6, **characterized in that** the fibers are glass fibers.

8. Composition according to any one of Claims 1 to 7, **characterized in that** said composition comprises from 20 to 80% by weight of fibers, relative to the total weight of the composition.

9. Process for manufacturing a composition according to any one of Claims 1 to 8, by cold blending or melt blending at least the polyamide and the fibers.

10. Process for injection molding an article in which a composition according to any one of Claims 1 to 9 is introduced into an injection molding device and the molding operation is carried out.

11. Article obtained by forming a composition according to any one of Claims 1 to 8.
